# EUROPEAN PATENT APPLICATION

(11) **EP 0 532 074 A1**
(43) Date of publication of application: **17.03.1993**
(21) Application number: 92202437.7
(22) Date of filing: 06.08.1992
(51) Int. Cl.: B01D 51/10, C01B 17/02, C10K 1/04, F25J 3/00, B01D 51/00, B01D 53/00

(54) **Method and device for treating a hot gaseous mixture**

(30) Priority: 06.08.1991 NL 9101354
(71) Applicant: N.V. Kema, NL-6812 AR Arnhem (NL)
(72) Inventor: Raas, Johannes Laurentius, NL-7006 JE Doetinchem (NL)
(74) Representative: Hoijtink, Reinoud

(57) **Abstract**

The invention relates to a method and device (2,4,8) for treating a hot gas mixture, in particular gas from a gasification installation for instance for coal. The method comprises of causing the gas mixture to expand in order to lower the pressure and temperature thereof; subsequently performing a treatment on the expanded gas mixture; and compressing the gas mixture to raise the pressure and temperature thereof, wherein the treatment can consist of washing the gas mixture with water, wetting the gas mixture with water or separating sulphur droplets after desulphurizing the gas mixture.

## Description

The invention relates to a method and device for treating a hot gas mixture, in particular gas from a gasification installation for instance for coal.

In the gas turbines of an electricity power station gases are combusted which substantially originate from gasification installations, in which a fuel such as for example coal, oil, etc. is gasified with oxygen at about 800 to 1500°C. The gas from the gasification installation comprises a number of pollutants such as dust, sulphur compounds, halogen compounds, nitrogen compounds, alkali salts and the like. Such pollutants are not only bad for the environment, but moreover have an adverse effect on the installations used, such as for example the gas turbine.

In order to prevent this, the gas is purified prior to being supplied to an installation for generating electricity. Various methods are proposed for this purification.

In so-called cold gas purification the gas mixture is first washed with water to remove dust, halogen compounds, alkali salts and nitrogen compounds. The gas mixture is subsequently cooled to about room temperature. Finally, the gas mixture is desulphurized by means of liquid chemical absorbents. Desulphurizing takes place at approximately 30-40°C. The drawback to this purifying method is the low efficiency, caused by the great energy loss occurring when the hot gas mixture is brought into contact with water.

Another proposed purifying method is the fully dry purification method. In this method dust is first removed from the hot gas mixture by means of filters and cyclones. The halogen compounds are then captured by means of soda injection, whereafter dust is again removed. Desulphurizing takes place for example using iron oxide on silicon. Although these methods achieve a significant gain in efficiency (± 3% point), the nitrogen compounds are not removed and it is not yet known in the case of a number of steps whether they are really as effective in practice as is assumed in theory. During use of this method, however, (chemical) NOₓ formation occurs in the combustion chamber of the gas turbine. It is quite possible to remove the NOₓ after the gas turbine, for example via selective catalytic reduction with ammonia, but this is a very expensive method.

So-called tepid gas purification is proposed as a compromise. After a wet pre-washing of the gas to remove dust and the like, the gas mixture is desulphurized dry. Because of the wet pre-washing most of the compounds including the nitrogen compounds are indeed removed but, compared with the fully dry purification method, the efficiency is still quite low.

It is therefore the object of the invention to provide a method and device for treating a hot gas mixture with which the fullest possible purification is obtained at the highest possible efficiency.

This is achieved by the invention through a method comprising the steps of:
a) causing the gas mixture to expand in order to lower pressure and temperature thereof;
b) subsequently performing a treatment on the expanded gas mixture; and
c) compressing the gas mixture to raise the pressure and temperature thereof. By causing the gas mixture to expand the temperature thereof is lowered, whereby much less energy is lost during the treatment than if the treatment were to be carried out immediately on the hot gas. By compressing the gas mixture the temperature is then raised again significantly.

By means of this method various treatments can be performed on the gas mixture. The treatment can firstly consist of washing the gas mixture with water to remove dust and impurities. In addition it is possible to wet already purified fuel gas just prior to supply thereof to the gas turbine. Thermal NOₓ formation in the burners of the gas turbines is hereby significantly decreased.

The treatment can likewise consist of separating a liquid. On the one hand it is possible to wet the hot gas prior to the expansion in order to absorb dust and the like. During the treatment the wetting liquid is separated from the gas mixture in the form of droplets. In addition it is possible to guide the hot gas over a dry desulphurizing device prior to expansion. Such a desulphurizing device consists of a catalysis bed containing iron oxide, which iron oxide is converted by the sulphur compounds into iron sulphide. The iron sulphide is then converted into iron oxide wherein liquid sulphur is released. This sulphur can be separated during the treatment in the form of a sulphur vapour.

The method according to the invention makes it possible to hold the gas mixture at a quite high temperature level. Incoming crude gas at 350°C is for example cooled to 170°C in the expansion device. The pressure of the gas therein falls from 30 to 7.5 bar. During the water washing the gas cools further to 100°C. After compression the temperature of the gas is 280°C and the pressure 20 bar. The efficiency gain relative to the tepid gas purification amounts to at least about 1% point.

The device according to the invention comprises an expansion unit, a treatment unit and a compression unit. Depending on the type of treatment, the treatment unit is a water washer, in which the gas mixture is brought into contact with water according to the counterflow principle, a water droplet separator, a sulphur droplet separator or a wetting column. The expansion unit can be provided with adjustable inlet blades for optimizing the action of the expansion device at decreased load. The inlet and guide blades are preferably hollow. The cavities can be filled with hot, already purified fuel gas or an inert hot gas mixture or gas, for example nitrogen, for heating the blades. In this manner the precipitation of corroding and eroding substances such as ammonium chloride or sulphur on the blades is prevented.

The present invention will be further elucidated further on the basis of a number of drawings, in which corresponding parts are indicated by corresponding reference numerals and in which:
figure 1 shows a schematic view of a method and device according to the invention;
figure 2 is a schematic view of a method and device according to the invention wherein the compression unit is connected to an extra drive unit;
figure 3 shows a schematic view of a method and device according to the invention with an extra compression unit;
figure 4 is a schematic view of a method and device for washing a hot gas mixture and desulphurizing thereof;
figure 5 shows a schematic view of a method and device for wetting a hot gas mixture prior to expansion; and
figure 6 is a schematic view of a method and device for wetting a gas mixture.

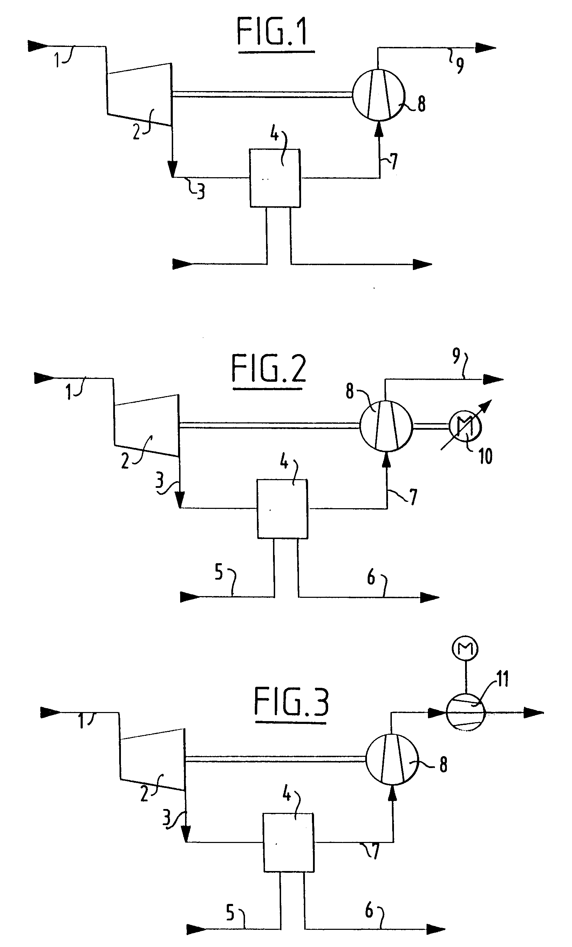

Figure 1 shows the basic layout according to the invention. The crude gas mixture indicated by the arrow 1 is expanded in an expansion unit 2 and subsequently fed via arrow 3 to a treatment unit 4. The treatment unit 4 is in this case a water washer to which water is supplied at arrow 5, which water is brought into contact in counterflow with the hot gas mixture. The water takes dust, halogen compounds, nitrogen compounds, alkali salts and the like out of the hot gas mixture and is drained off again at arrow 6. The purified gas mixture is then guided via arrow 7 to a compression unit 8 where the gas is compressed in order to raise the temperature and pressure thereof. The gas mixture that leaves the device at arrow 9 is suitable for supply to a gas turbine or can optionally undergo an additional treatment.

Figure 2 shows the same schematic outline as figure 1, wherein the compression unit is however connected to an additional drive device 10. The compression unit 8 is normally only driven by the expansion unit 2.

Figure 3 shows a schematic disposition similar to figures 1 and 2, with the difference that after the compression unit an extra compression unit 11 is connected to further compress the hot gas mixture.

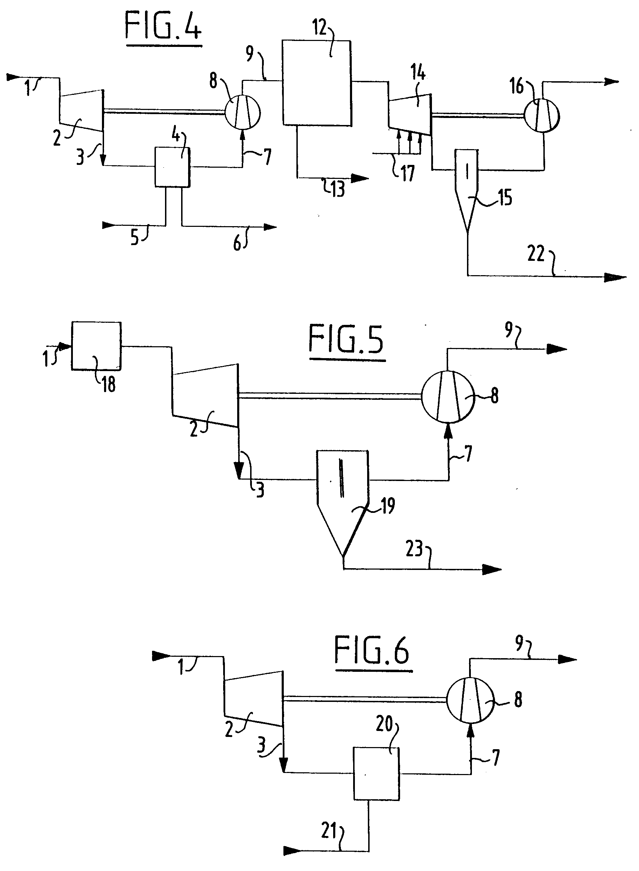

Figure 4 shows an extensive device according to the invention. The crude gas mixture guided via the arrow 1 to the expansion unit 2 is divested of impurities in the water washer 3 and subsequently compressed in the compression unit 8. The resulting hot gas mixture is then guided over a dry desulphurizing device 12. The sulphur end product can either be separated immediately (arrow 13) or be guided via a second expansion step in an expansion unit 14 to sulphur droplet separator 15. After separation of a sulphur vapour 22 the hot gas mixture is again compressed in a second compression unit 16. Both options for separating sulphur are indicated in the same diagram. The expansion units are preferably provided with hollow blades. Such a provision offers the possibility of heating the blades by means of for instance hot flue gas, which prevents condensation of eroding and corroding substances on the blades. In the case shown the condensation of liquid sulphur on the blades is prevented at expansion unit 14 (arrows 17). It is likewise possible to apply such blades in the expansion unit 2 whereby precipitation of ammonium chloride is prevented.

Figure 5 provides a schematic representation of a device wherein the crude gas supplied at arrow 1 is humidified in a wetting unit 18 with a small amount of water, for example 5% with respect to the gas mixture, to absorb dust and harmful compounds. The gas mixture is subsequently expanded and the injected water together with the impurities absorbed therein is removed via 23 from the gas in a water droplet separator 19.

Finally, figure 6 gives a schematic representation of a wetting device according to the invention. The gas which is first expanded in expansion unit 2 is humidified in a wetting column 20 with a quantity of water 21 and then compressed in compression unit 8. The gas can for instance be fuel gas which may or may not be purified, but also natural gas.

## Claims

1. Method for treating a hot gas mixture, in particular gas from a gasification installation for instance for coal, comprising the steps of:
a) causing the gas mixture to expand in order to lower the pressure and temperature thereof;
b) subsequently performing a treatment on the expanded gas mixture; and
c) compressing the gas mixture to raise the pressure and temperature thereof.

2. Method as claimed in claim 1, **characterized in that** the treatment consists of washing the gas mixture with water.

3. Method as claimed in claim 1, **characterized in that** the treatment consists of wetting the gas mixture with water.

4. Method as claimed in claim 1, **characterized in that** prior to step a) a small amount of water is supplied to the gas mixture and the treatment consists of separating water droplets from the gas mixture.

5. Method as claimed in claim 1, **characterized in that** prior to step a) the gas mixture is supplied to a desulphurizing device and the treatment consists of separating sulphur droplets from the gas mixture.

6. Device for performing the method as claimed in any of the foregoing claims, comprising an expansion unit, a treatment unit connected in series thereto and a compression unit connected in series to the treatment unit.

7. Device as claimed in claim 6, **characterized in that** the expansion unit is drivingly connected to the compression unit.

8. Device as claimed in claim 6 or claim 7, **characterized in that** the inlet of an additional compression unit is connected to the outlet of the compression unit.

9. Device as claimed in any of the claims 6-8, **characterized in that** the compression unit is provided with an extra drive unit.

10. Device as claimed in any of the claims 6-9, **characterized in that** the treatment unit is a water washer.

11. Device as claimed in any of the claims 6-10, **characterized in that** the inlet of the expansion unit is connected to the outlet of a desulphurizing unit and the treatment unit is a sulphur droplet separator.

12. Device as claimed in any of the claims 6-11, **characterized in that** the inlet of the expansion unit is connected to the outlet of a water injection unit and the treatment unit is a water droplet separator.

13. Device as claimed in any of the claims 6-12, **characterized in that** the expansion unit is provided with adjustable inlet guide blades.
